# EUROPEAN PATENT SPECIFICATION

(11) **EP 3 459 060 B1**
(45) Date of publication and mention of the grant of the patent: **18.05.2022**
(21) Application number: 17737118.4
(22) Date of filing: 23.06.2017
(51) Int. Cl.: G07F 19/00, G06Q 20/32

(54) **METHOD AND SYSTEM FOR CARDLESS DISBURSEMENT FROM AN AUTOMATED TELLER MACHINE**
VERFAHREN UND SYSTEM ZUR KARTENLOSEN AUSZAHLUNG AUS EINEM GELDAUTOMATEN
PROCÉDÉ ET SYSTÈME DE DÉBOURSEMENT SANS CARTE POUR GUICHET AUTOMATIQUE BANCAIRE

(30) Priority: 29.06.2016 US 201662356104 P
(43) Date of publication of application: 27.03.2019
(73) Proprietor: Mastercard International Incorporated, Purchase, New York 10577 (US)
(72) Inventor: BELIN, Max, Alexander, Pembroke Pines, FL 33332 (US); BRAGA, Derrick, Michael, Rochester Hills, MI 48307 (US); LAROSA, Theresa, Noblesville, IN 46062 (US); PAREJA MULLER, Ricardo, Stamford, CT 06902 (US); GOODMAN, Daniel, Jason, White Plains, CT 10605 (US); PAGE, Scott, J., Wright City, MO 63390 (US); BUGH, Jill, Boyd, Town and Country, MO 63017 (US); HILL, Dennis, O'Fallon, MO 63366 (US); BHAGAT, Deepankar, Chesterfield, MO 63017 (US); KOLETSKY, Barry, Seth, DeLand, FL 32720 (US); MCMILLIN, Glen, R., Liberty, MO 64068 (US)
(74) Representative: Walker-Smith, Samantha Lynelle Zhi
(86) International application number: PCT/US2017/038896
(87) International publication number: WO 2018/005255

(56) References cited:
- WO-A1-2016/089629
- CN-A- 101 882 343
- US-A1- 2009 078 758
- US-A1- 2011 238 573
- US-A1- 2012 226 610
- US-A1- 2015 199 671

## Description

### CROSS-REFERENCE TO RELATED APPLICATION

This application claims the benefit of, and priority to, U.S. Application No. 62/356,104 filed on June 29, 2016.

### FIELD

The present disclosure relates to the cardless withdrawal of funds from an automated teller machine, specifically the use of unique data combinations distributed to an individual and input into an automated teller machine to accommodate for the disbursement of funds without the use of a card.

### BACKGROUND

Automated teller machines (ATMs) provide great convenience to account holders and other authorized users of a transaction account that have been issued payment cards on the transaction account. The individual can insert their payment card into an ATM, authenticate themselves using a personal identification number (PIN), and then be able to perform a number of different functions right from the ATM, such as cash withdrawals, balance inquiries, fund transfers, etc. Being automated, ATMs often enable individuals to perform such actions with their transaction account at any time of day and day of the week, and often in locations that would not be conducive to a full, staffed branch for the related financial institution.

While ATMs provide such significant conveniences to card holders for transaction accounts, existing ATM systems require the user of a payment card to perform its associated functions. As a result, individuals that may have a transaction account or access to funds associated with a transaction account, but have not been issued a payment card, may be unable to use the ATM to access their funds. Thus, it may be difficult for an individual that lacks a payment card to access funds that are available to them, particularly in situations where the individual may be the recipient of funds assigned to them as aid benefit, such as the result of a natural disaster where the need for money may be urgent but where infrastructure and the ability to get payment cards into the hands of each recipient may be lacking, if an individual needs emergency funds, if payment cards or wallets are lost or stolen, etc.

Thus, there is a need for a technical solution to enable the withdrawal of funds from an ATM without the use of a payment card.

### SUMMARY

The present disclosure provides a description of systems and methods for cardless withdrawal from an automated teller machine. The withdrawal of cash from an automated teller machine without the use of a payment card may provide for a technological solution to enable an individual that is the intended recipient of funds to do so without the need for the infrastructure and technology required to produce and distribute payment cards to recipients, particularly in situations where infrastructure may be lacking and time may be of the essence, such as in instances of aid distribution following a natural disaster.

A method for cardless withdrawal from an automated teller machine includes: receiving, by an input device of an automated teller machine (ATM), user input comprising at least: a first code, a device identifier associated with a computing device, and a transaction amount; electronically transmitting, by a transmitting device of the ATM, at least the first code, device identifier, and the transaction amount to a first computing system; receiving, by a receiving device of the ATM, a transaction account number from the first computing system; electronically transmitting, by the transmitting device of the ATM, a withdrawal request including at least the transaction account number and the transaction amount to an acquiring institution; receiving, by the receiving device of the ATM, an indication from the acquiring institution that indicates approval of the withdrawal request; and dispensing, by a dispensing module of the ATM, one or more payment instruments having a value equivalent to the transaction amount.

A system for cardless withdrawal from an automated teller machine includes: a dispensing module of an automated teller machine (ATM); an input device of the ATM configured to receive user input comprising at least: a first code, a device identifier associated with a computing device, and a transaction amount; a transmitting device of the ATM configured to electronically transmit at least the first code, device identifier, and the transaction amount to a first computing system; and a receiving device of the ATM configured to receive a transaction account number from the first computing system. The transmitting device of the ATM is further configured to electronically transmit a withdrawal request including at least the transaction account number and the transaction amount to an acquiring institution. The receiving device of the ATM is further configured to receive an indication from the acquiring institution that indicates approval of the withdrawal request. The dispensing module of the ATM is configured to dispense one or more payment instruments having a value equivalent to the transaction amount. Document WO 2016/089629 discloses a system and a method for facilitate cash transactions at an ATM when a card is not present. WO 2016/089629 does not disclose that a first code transmitted to a computing device by a disbursing entity is received as user input of the ATM, wherein the first code is unique to the cardless withdrawal from the ATM.

### BRIEF DESCRIPTION OF THE DRAWING FIGURES

The scope of the present disclosure is best understood from the following detailed description of exemplary embodiments when read in conjunction with the accompanying drawings. Included in the drawings are the following figures:
FIG. 1 is a block diagram illustrating a high level system architecture for the cardless cash withdrawal of funds from an automated teller machine in accordance with exemplary embodiments.
FIG. 2 is a block diagram illustrating an automated teller machine configured for cardless cash withdrawal for use in the system of FIG. 1 in accordance with exemplary embodiments.
FIG. 3 is a flow diagram illustrating a process for the submission of data for recipient identification to request cardless cash withdrawal from an automated teller machine using the system of FIG. 1 in accordance with exemplary embodiments.
FIG. 4 is a flow diagram illustrating a process for the cardless withdrawal of funds from an automated teller machine using the system of FIG. 1 in accordance with exemplary embodiments.
FIG. 5 is a flow chart illustrating an exemplary method for cardless withdrawal from an automated teller machine in accordance with exemplary embodiments.
FIG. 6 is a flow diagram illustrating the processing of a payment transaction in accordance with exemplary embodiments.
FIG. 7 is a block diagram illustrating a computer system architecture in accordance with exemplary embodiments.

Further areas of applicability of the present disclosure will become apparent from the detailed description provided hereinafter. It should be understood that the detailed description of exemplary embodiments are intended for illustration purposes only and are, therefore, not intended to necessarily limit the scope of the disclosure.

### DETAILED DESCRIPTION

### Glossary of Terms

Payment Network - A system or network used for the transfer of money via the use of cash-substitutes for thousands, millions, and even billions of transactions during a given period. Payment networks may use a variety of different protocols and procedures in order to process the transfer of money for various types of transactions. Transactions that may be performed via a payment network may include product or service purchases, credit purchases, debit transactions, fund transfers, account withdrawals, etc. Payment networks may be configured to perform transactions via cash-substitutes, which may include payment cards, letters of credit, checks, transaction accounts, etc. Examples of networks or systems configured to perform as payment networks include those operated by MasterCard^{®}, VISA^{®}, Discover^{®}, American Express^{®}, PayPal^{®}, etc. Use of the term "payment network" herein may refer to both the payment network as an entity, and the physical payment network, such as the equipment, hardware, and software comprising the payment network.

Payment Rails - Infrastructure associated with a payment network used in the processing of payment transactions and the communication of transaction messages and other similar data between the payment network and other entities interconnected with the payment network that handles thousands, millions, and even billions of transactions during a given period. The payment rails may be comprised of the hardware used to establish the payment network and the interconnections between the payment network and other associated entities, such as financial institutions, gateway processors, etc. In some instances, payment rails may also be affected by software, such as via special programming of the communication hardware and devices that comprise the payment rails. For example, the payment rails may include specifically configured computing devices that are specially configured for the routing of transaction messages, which may be specially formatted data messages that are electronically transmitted via the payment rails, as discussed in more detail below.

Transaction Account - A financial account that may be used to fund a transaction, such as a checking account, savings account, credit account, virtual payment account, etc. A transaction account may be associated with a consumer, which may be any suitable type of entity associated with a payment account, which may include a person, family, company, corporation, governmental entity, etc. In some instances, a transaction account may be virtual, such as those accounts operated by PayPal^{®}, etc.

Issuer - An entity that establishes (e.g., opens) a letter or line of credit in favor of a beneficiary, and honors drafts drawn by the beneficiary against the amount specified in the letter or line of credit. In many instances, the issuer may be a bank or other financial institution authorized to open lines of credit. In some instances, any entity that may extend a line of credit to a beneficiary may be considered an issuer. The line of credit opened by the issuer may be represented in the form of a payment account, and may be drawn on by the beneficiary via the use of a payment card. An issuer may also offer additional types of payment accounts to consumers as will be apparent to persons having skill in the relevant art, such as debit accounts, prepaid accounts, electronic wallet accounts, savings accounts, checking accounts, etc., and may provide consumers with physical or non-physical means for accessing and/or utilizing such an account, such as debit cards, prepaid cards, automated teller machine cards, electronic wallets, checks, etc.

Acquirer - An entity that may process payment card transactions on behalf of a merchant. The acquirer may be a bank or other financial institution authorized to process payment card transactions on a merchant's behalf. In many instances, the acquirer may open a line of credit with the merchant acting as a beneficiary. The acquirer may exchange funds with an issuer in instances where a consumer, which may be a beneficiary to a line of credit offered by the issuer, transacts via a payment card with a merchant that is represented by the acquirer.

Controlled Payment Number - Controlled payment numbers may be payment numbers associated with a payment account that are subject to one or more rules. In many cases, these rules may be set by a cardholder, such as spending limits, limits on days and/or times of a transaction, limits on merchants or industries, transaction spending or frequency limits, etc. Controlled payment numbers may offer an account holder an opportunity to give payment cards tied to the account to others for use, but subject to rules set by the cardholder, such as an employer distributing cards to employees, or a parent distributing cards to children. Additional detail regarding controlled payment numbers may be found in U.S. Patent No. 6,636,833, issued October 21, 2003; U.S. Patent No. 7,136,835, issued November 14, 2006; U.S. Patent No. 7,571,142, issued August 4, 2009; U.S. Patent No. 7,567,934, issued July 28, 2009; U.S. Patent No. 7,593,896, issued September 22, 2009; U.S. Patent Application No. 12/219,952, filed July 30, 2008; U.S. Patent Application No. 12/268,063, filed November 10, 2008; and U.S. Patent Application No. 12/359,971, filed January 26, 2009

### System for Cardless Withdrawal from Automated Teller Machines

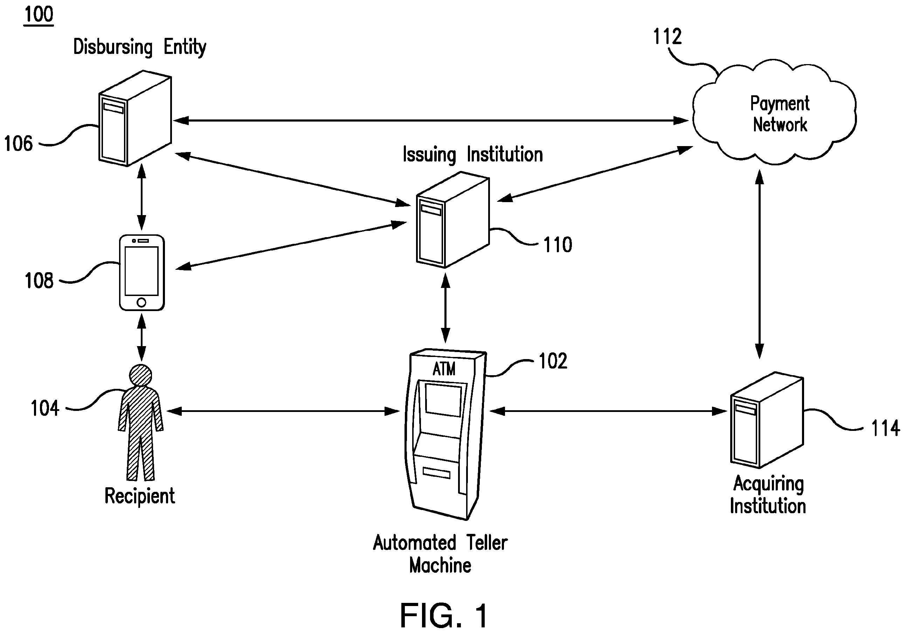

FIG. 1 illustrates a system 100 for the cardless withdrawal of funds from an automated teller machine (ATM) 102 via the use of specifically distributed and inputted data that is directly associated with an intended recipient 104.

The ATM 102, discussed in more detail below, may be configured to enable the recipient 104 to request a withdrawal of funds without the use of a payment card, where the recipient 104 provides data associated therewith for authentication thereof as an authorized recipient of assigned funds. In the system 100, a disbursing entity 106 may be interested in disbursing funds to one or more recipients 104 without the use of payment cards, where the funds may be received by the recipients 104 using an ATM 102. The disbursing entity 106 may be configured to communicate with the recipients 104 using computing devices 108 associated therewith. The computing devices 108 may be configured to receive data electronically transmitted by the disbursing entity 106 for display to the user (e.g., the recipient 104) and may be any type of computing device suitable for performing the functions discussed herein, such as a cellular phone, smart phone, smart watch, laptop computer, notebook computer, tablet computer, wearable computing device, implantable computing device, etc.

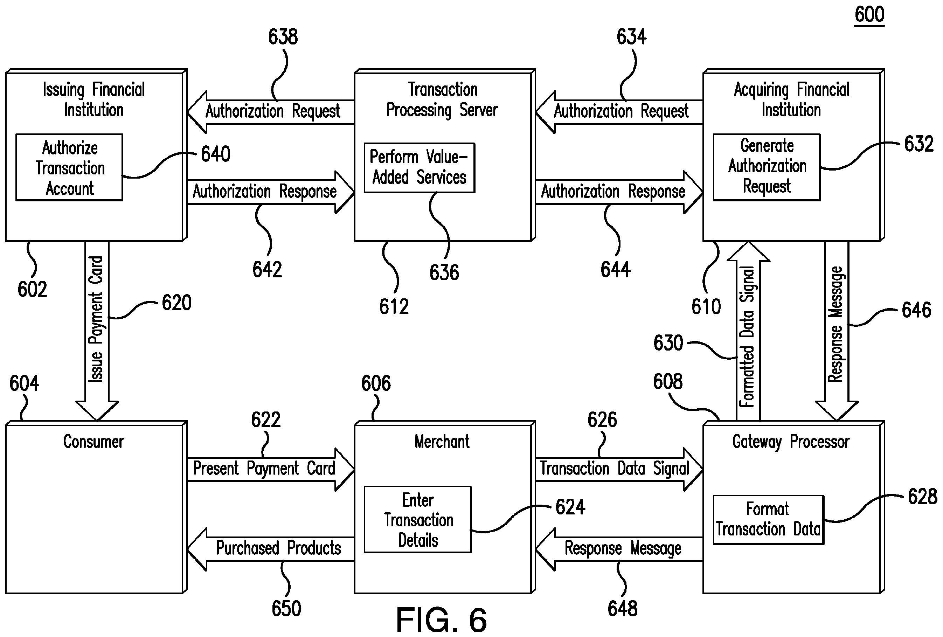

The disbursing entity may distribute the funds intended for the recipients 104 to an issuing institution 110, which may be a financial institution, such as an issuing bank, or other entity that is configured to participate in financial transactions, such as for payment of funds that are withdrawn from the ATM 102. The distribution of funds to the issuing institution 110 by the disbursing entity 106 may be accomplished via a payment transaction conducted between the disbursing entity 106 and the issuing institution 110. In some embodiments, the payment transaction may be a business-to-business transaction, and/or may be processed via a payment network 112. The payment network 112 may process the payment transaction using traditional methods and systems, such as described in more detail below with respect to the process 600 illustrated in FIG. 6.

The disbursing entity 106 may distribute at least the amount intended for withdrawal by the recipient 104 to the issuing institution 110, and may also provide an additional amount, such as a fee charged by the issuing institution 110 for the service. The disbursing entity 106 may electronically transmit a first code, also referred to herein as a "disbursement code" to the computing device 108 associated with the intended recipient. In some embodiments, the code may be included in a short messaging service (SMS) message, which may be transmitted to the computing device 108 using a suitable communication network, such as a cellular communication network. In other embodiments, the code may be transmitted via an application program executed by the computing device 108, such as may be associated with the disbursing entity 106. The first code may be accompanied by the amount of money to be withdrawn by the recipient 104 in the cardless withdrawal. For instance, in one example, the disbursing entity 106 may send an SMS message to the computing device 108 that includes a code of "5946" and a transaction amount of "125.00" to be withdrawn.

In an exemplary embodiment, the disbursing code may also be electronically transmitted to the issuing institution 110 for use in authentication of the recipient 104 when attempting the cardless withdrawal. The disbursing entity 106 may also provide a device identifier associated with the computing device 108 to the issuing institution 110. The device identifier may be a unique value associated with the computing device 108, which may also be used by the issuing institution 110 for authentication that the recipient 104 attempting the cardless withdrawal is the intended recipient of the associated funds. The device identifier may be any suitable type of value, such as a telephone number, e-mail address, username, media access control address, registration number, identification number, serial number, etc. For instance, in one example, the device identifier may be the telephone number to which the SMS that includes the disbursement code and transaction amount are sent to.

In some embodiments, the device identifier may be a unique value associated with a specific user of the computing device 108, such as the recipient 108. In such instances, the device identifier may differentiate between multiple users of the computing device 108, such as may occur in areas following natural disasters where access to computing devices or communications are limited. In such embodiments, the device identifier may be a username, e-mail address, name, social security number or tax identification number (e.g., or part thereof), or other suitable value that may be associated directly with a recipient 104. As used herein, "device identifier," may refer to any identifier that may be used in performing the functions discussed herein including those used for authentication of the computing device 108 as well as those used in authentication of the recipient 104.

Once the recipient 104 has received the information from the disbursing entity 106, the recipient 104 may go to the ATM 102 and request a cardless withdrawal, such as via a user interface of the ATM 102 specifically configured therefor. Once the cardless withdrawal is requested, the ATM 102 may prompt the recipient 104 for at least the disbursement code, the transaction amount requested, and the device identifier associated with the computing device 108. The recipient 104 may then input each of the pieces of data into the ATM 102 using one or more suitable input devices. The ATM 102 may electronically transmit the inputted data to the issuing institution 110. The issuing institution 110 may then authenticate the data by comparing the data provided by the recipient 104 with the data received from the disbursing entity 106.

The authentication may include, for instance, comparing the disbursement code provided by the disbursing entity 106 with the code supplied by the recipient 104, to ensure that the recipient 104 entered the correct disbursement code, as would have been transmitted thereto via their computing device 108. The authentication may also include comparing the transaction amount supplied by the recipient 104 with the disbursement amount intended by the disbursing entity 106, as well as the device identifier of the computing device 108. Authentication of each of the pieces of data may ensure that the recipient 104 attempting the withdrawal is the recipient 104 intended by the disbursing entity 106. Once the recipient 104 has been properly authenticated, the issuing institution 110 may respond to the ATM 102 with a confirmation that withdrawal may be requested. If authentication of one or more items of data fails, then the issuing institution 110 may instruct the ATM 102 to prevent withdrawal, and may provide the ATM 102 with a reason, such as may be displayed to the recipient 104. For instance, if the recipient 104 enters the wrong disbursement code, they may be informed so by the ATM 102. In some cases, the ATM 102 may allow re-entry of data and attempt subsequent authentication. In some such cases, the recipient 104 may be prevented from retrying authentication after a predetermined number of attempts.

If the authentication is successful and the ATM 102 is provided confirmation that withdrawal may be requested, the ATM 102 may submit a withdrawal request to their acquiring institution 114. The acquiring institution 114 may be a financial institution associated with the ATM 102, such as an acquiring bank, or other entity configured to process withdrawals and other requests that are associated with the ATM 102 for the disbursement, transfer, or other management of currency. The acquiring institution 114 may receive the withdrawal request, which may include the authenticated transaction amount as well as a transaction account number, which may be associated with the transaction account to which the requested amount is to be withdrawn.

As the recipient 104 does not provide a payment card to the ATM 102, the transaction account number to be used in the withdrawal request may be provided by the issuing institution 110 when providing the confirmation to the ATM 102. The issuing institution 110 may identify a transaction account number that is directly associated with the recipient 104 and/or computing device 108, such as by being associated in the issuing institution 110 with the disbursement code and/or the device identifier. The issuing institution 110 may identify the transaction account number related to the data provided for authentication, and may return the identified transaction account number along with the confirmation, to be included in the withdrawal request that is submitted to the acquiring institution 114. The transaction for withdrawal may be processed by the payment network 112 using traditional methods and systems, which may include the approval of the transaction by the issuing institution 110. Upon receipt of the authorization request for the transaction that includes the transaction account number, the issuing institution 110 may indicate internally that the recipient 104 has successfully withdrawn their funds. The payment network 112 may receive an authorization response indicating the approval, which may be forwarded to the acquiring institution 114, which may notify the ATM 102 of the successful approval. The ATM 102 may then dispense the correct amount of funds to the recipient 104.

In some embodiments, the issuing institution 110 may use a controlled payment number for use in the withdrawal transaction. A controlled payment number may be an account number that is subject to one or more transaction controls. In such embodiments, the issuing institution 110 may request, generate, or otherwise identify a controlled payment number for the recipient's transaction, which may be subject to controls on usage (e.g., single use), transaction amount (e.g., to the amount to be disbursed to the recipient 104), and/or other controls that may ensure proper usage of the controlled payment number, such as an expiration date. The controlled payment number may be associated with a transaction account by which payment transactions conducted using the controlled payment number are to be funded. In some instances, the issuing institution 110 may use a single transaction account for all cardless disbursements, or for all cardless disbursements for a specific disbursing entity 106, to which all controlled payment numbers for associated disbursements may be associated.

The controlled payment number may be provided to the ATM 102 with the confirmation that withdrawal may be requested. The ATM 102 may provide the controlled payment number to the acquiring institution 114, which may use the controlled payment number as the transaction account number when submitting the transaction message for the payment transaction to the payment network 112. The payment network 112 may then process the payment transaction accordingly. In an exemplary embodiment, the controlled payment number may be swapped for the transaction account number for the associated transaction account during processing. In such embodiments, the swapping may be performed by the entity that identifies the controlled payment number, such as the issuing institution 110, payment network 112, or a third party entity. The controlled payment number may be used by the issuing institution 110 to differentiate withdrawals and associate them with the appropriate recipient 104. In some cases, withdrawal requests may include data associated with the recipient 104 or computing device 108, which may be included in the withdrawal transaction, and may be used by the issuing institution 110 in identification of the corresponding data.

In some embodiments, the system 110 may include a service provider. The service provider may be an entity associated with the issuing institution 110, which may perform functions associated with the use and management of the ATM 102 on behalf of the issuing institution 110. For example, the service provider may be an entity associated with the software executed by or the hardware of the ATM 102. In such embodiments, the service provider may be configured to receive data from disbursing entities 106 for the authentication, and may perform the functions related to authentication and denial/approval of requests for cardless withdrawal, which may include the identification and supplying of controlled payment number. In these embodiments, the issuing institution 110 may perform the traditional functions of an issuing bank using existing systems, as the service provider may perform the functions suitable for performing the methods discussed herein.

In some embodiments, additional authentication data may be used for a higher level of security for cardless withdrawals. For instance, in a first example, the issuing institution 110 or service provider may electronically transmit a second code, referred to herein as a service provider code, to the computing device 108. The second code must be supplied by the recipient 104 during the requesting of the cardless withdrawal, which may be provided to the issuing institution 110 or service provider, as applicable, for use in authentication. In instances where an ATM 102 may perform cardless withdrawals for multiple issuing institutions 110 and/or service providers, the second code may be used for the identification thereof. For instance, two different service providers may each use a different provider code, where the ATM 102 may route a request for authentication to the correct service provider based on the code provided by the recipient 104. In a second example, the recipient 104 may also be required to provide additional data to the ATM 102 for proof that they are the genuine intended recipient, such as their name, which may be provided to the issuing institution 110 (e.g., or service provider) by the disbursing entity 106.

In some instances, the service provider or issuing institution 110 may be configured to electronically transmit both the first (e.g., disburser) code and the second (e.g., provider) code to the recipient 104 via the computing device 108. In such instances, the disbursing entity 106 may provide the first code to the appropriate entity. In some embodiments, the disbursing entity 106, issuing institution 110, or service provider may be configured to provide additional instructions to the recipient 104 for receipt of the cash. For instance, in one example, the recipient 104 may be provided with an address, coordinates, or other information for locating an ATM 102 at which the cardless withdrawal may be performed.

In some cases, the withdrawal request submitted to the acquiring institution 114 may require a personal identification number (PIN), such as due to the use of a specially formatted data message that may require the entry of a PIN for usage. In such cases, the ATM 102 may use a predetermined value in place of the PIN, which may be ignored or confirmed by the acquiring institution 114 as the predetermined value. In such a case, the recipient 104 may not be required to input a PIN (e.g., as the recipient 104 is already being authenticated by at least three alternative pieces of data), but one may be supplied by the ATM 102 to ensure successful processing of the request. In some instances, the PIN to be used may be supplied by the issuing institution 110 with the confirmation and the transaction account number. In some cases, the payment network 112 may supply the PIN. In such cases, the payment network 112 may, upon receipt of an authorization request for the withdrawal transaction, insert the PIN into a corresponding data element for use by the issuing institution 110 during the authorization process.

The methods and systems discussed herein may enable an ATM 102 allow a recipient 104 to receive funds dispensed from an ATM 102 without the use of a payment card. The recipient 104 may receive information using their computing device 108, which the recipient 104 may input into the ATM 102 for verification to receive their funds. Such methods may provide for the ability to a significant number of recipients 104 to quickly and easy receive funds without the need for payment cards to be produced and distributed, and without the need for personnel due to the automated nature of ATMs 102. The methods and systems discussed herein thus provide for a technological improvement that can provide for significant benefits in the disbursement of funds, such as in the disbursement of funds to beneficiaries by aid programs using only existing computing devices 108 and ATMs 102.

### Automated Teller Machine

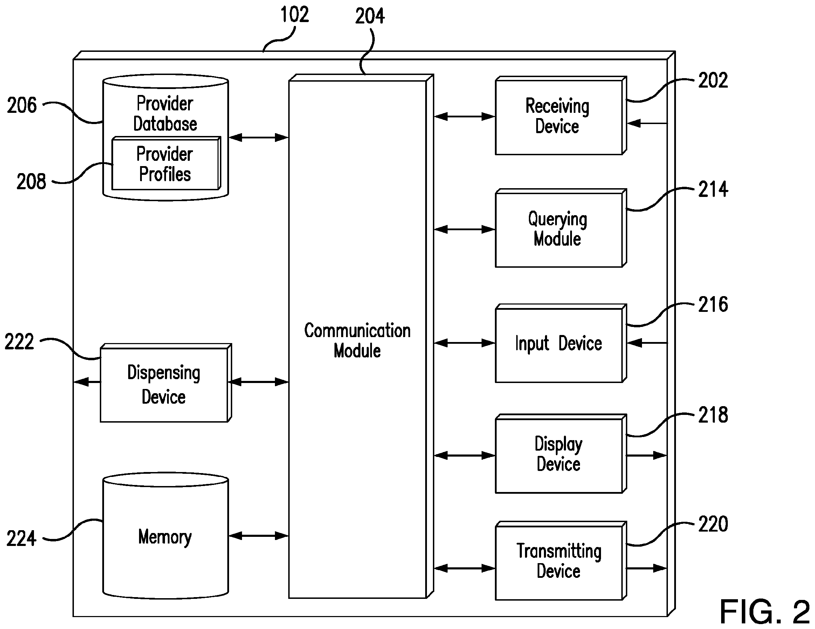

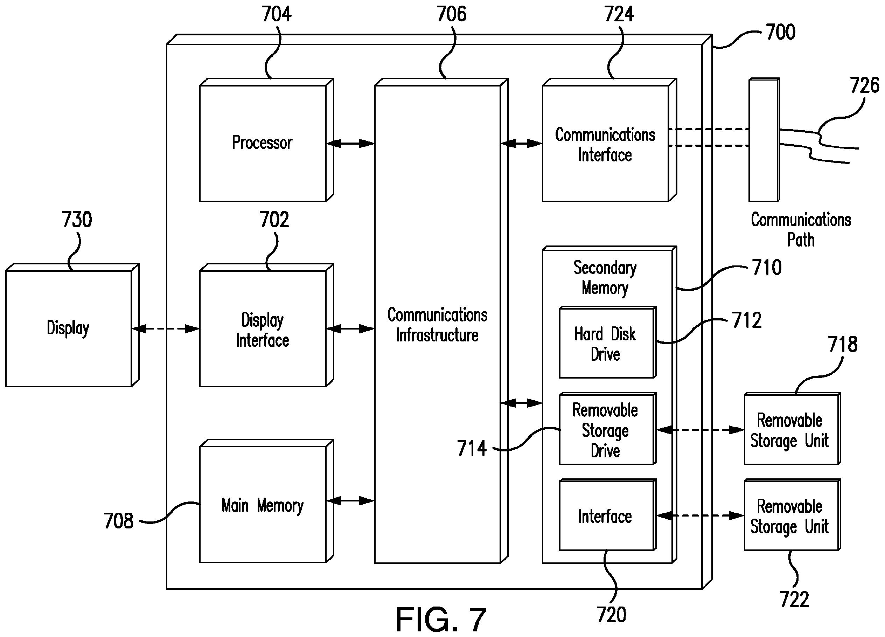

FIG. 2 illustrates an embodiment of an automated teller machine 102 in the system 100. It will be apparent to persons having skill in the relevant art that the embodiment of the automated teller machine 102 illustrated in FIG. 2 is provided as illustration only and may not be exhaustive to all possible configurations of the automated teller machine 102 suitable for performing the functions as discussed herein. For example, the computer system 700 illustrated in FIG. 7 and discussed in more detail below may be a suitable configuration of the automated teller machine 102.

The automated teller machine 102 may include a receiving device 202. The receiving device 202 may be configured to receive data over one or more networks via one or more network protocols. In some embodiments, the receiving device 202 may be configured to receive data over the payment rails, such as using specially configured infrastructure associated with payment networks 112 for the transmission of transaction messages that include sensitive financial data and information. In some instances, the receiving device 202 may also be configured to receive data from computing devices 108, issuing institutions 110, payment networks 112, acquiring institutions 114, and other entities via alternative networks, such as the Internet. In some embodiments, the receiving device 202 may be comprised of multiple devices, such as different receiving devices for receiving data over different networks, such as a first receiving device for receiving data over payment rails and a second receiving device for receiving data over the Internet. The receiving device 202 may receive electronically transmitted data signals, where data may be superimposed or otherwise encoded on the data signal and decoded, parsed, read, or otherwise obtained via receipt of the data signal by the receiving device 202. In some instances, the receiving device 202 may include a parsing module for parsing the received data signal to obtain the data superimposed thereon. For example, the receiving device 202 may include a parser program configured to receive and transform the received data signal into usable input for the functions performed by the processing device to carry out the methods and systems described herein.

The receiving device 202 may be configured to receive data signals electronically transmitted by issuing institutions 110, which may be superimposed or otherwise encoded with responses to withdrawal authentications. The responses may indicate denial of a withdrawal authentication if the authentication is unsuccessful, which may also indicate the reason for unsuccessful authentication, as well as approval if the authentication is successful. In latter instances, the response may also include a controlled payment number to be used in the subsequent withdrawal request. The receiving device 202 may also be configured to receive data signals electronically transmitted by acquiring institutions 114, which may be superimposed or otherwise encoded with results of withdrawal requests, such as may indicate if cash is to be dispensed or not based on the corresponding transaction. In some embodiments, the receiving device 202 may be configured to receive data signals from computing devices 108, such as may be superimposed or otherwise encoded with data related to a request for cardless withdrawal. For instance, in one example, the computing device 108 may electronically transmit the device identifier associated therewith, and in some cases additional data (e.g., the first and second codes), to the ATM 102 for receipt by the receiving device 202 using near field communication.

The automated teller machine 102 may also include a communication module 204. The communication module 204 may be configured to transmit data between modules, engines, databases, memories, and other components of the automated teller machine 102 for use in performing the functions discussed herein. The communication module 204 may be comprised of one or more communication types and utilize various communication methods for communications within a computing device. For example, the communication module 204 may be comprised of a bus, contact pin connectors, wires, etc. In some embodiments, the communication module 204 may also be configured to communicate between internal components of the automated teller machine 102 and external components of the automated teller machine 102, such as externally connected databases, display devices, input devices, etc. The automated teller machine 102 may also include a processing device. The processing device may be configured to perform the functions of the automated teller machine 102 discussed herein as will be apparent to persons having skill in the relevant art. In some embodiments, the processing device may include and/or be comprised of a plurality of engines and/or modules specially configured to perform one or more functions of the processing device, such as a querying module 214, etc. As used herein, the term "module" may be software or hardware particularly programmed to receive an input, perform one or more processes using the input, and provides an output. The input, output, and processes performed by various modules will be apparent to one skilled in the art based upon the present disclosure.

The automated teller machine 102 may also include a provider database 206. The provider database 206 may be configured to store a plurality of provider profiles 208 using a suitable data storage format and schema. The provider database 206 may be a relational database that utilizes structured query language for the storage, identification, modifying, updating, accessing, etc. of structured data sets stored therein. Each provider profile 208 may be a structured data set configured to store data related to an issuing institution 110 or service provider. Each provider profile 208 may include at least a provider code associated with the related issuing institution 110 or service provider and communication details. In such instances, the communication details may be used to connect the appropriate service provider for authentication of inputted data based on the provider code input by the recipient 104 as part of the request.

The automated teller machine 102 may include a querying module 214. The querying module 214 may be configured to execute queries on databases to identify information. The querying module 214 may receive one or more data values or query strings, and may execute a query string based thereon on an indicated database, such as the provider database 206, to identify information stored therein. The querying module 214 may then output the identified information to an appropriate engine or module of the automated teller machine 102 as necessary. The querying module 214 may, for example, execute a query on the provider database 206 to identify a provider profile 208 related to a received cardless withdrawal request, based on the provider code included therein.

The automated teller machine 102 may also include or be otherwise be interfaced with one or more input devices 216. The input devices 216 may be internal to the automated teller machine 102 or external to the automated teller machine 102 and connected thereto via one or more connections (e.g., wired or wireless) for the transmission of data to and/or from. The input devices 216 may be configured to receive input from a user of the automated teller machine 102, such as the recipient 104, which may be provided to another module or engine of the processing server 102 (e.g., via the communication module 204) for processing accordingly. Input devices 216 may include any type of input device suitable for receiving input for the performing of the functions discussed herein, such as a keyboard, mouse, click wheel, scroll wheel, microphone, touch screen, track pad, camera, optical imager, etc. The input device 216 may be configured to, for example, receive input from the recipient 104 inputting a transaction amount, disbursement code, and device identifier, as well as a provider code, if applicable. In some instances, the input device 216 may be configured to read data displayed by a computing device 108, such as a machine-readable code (e.g., bar code, quick response (QR) code, etc.) encoded with data used in a cardless withdrawal request.

The automated teller machine 102 may also include or be otherwise interfaced with a display device 218. The display device 218 may be internal to the automated teller machine 102 or external to the automated teller machine 102 and connected thereto via one or more connections (e.g., wired or wireless) for the transmission of data to and/or from. The display device 218 may be configured to display data to a user of the automated teller machine 102, such as the recipient 104. The display device 218 may be any type of display suitable for displaying data as part of the functions discussed herein, such as a liquid crystal display, light emitting diode display, thin film transistor display, capacitive touch display, cathode ray tube display, light projection display, etc. In some instances, the automated teller machine 102 may include multiple display devices 218. The display device 218 may be configured to, for example, display a user interface to the recipient 104 that has an option for initiating a cardless withdrawal, as well as a user interface that prompts the recipient 104 for input of data required for cardless withdrawal, such as prompting the recipient 104 to input the transaction amount, device identifier, and necessary code(s).

The automated teller machine 102 may also include a transmitting device 220. The transmitting device 220 may be configured to transmit data over one or more networks via one or more network protocols. In some embodiments, the transmitting device 220 may be configured to transmit data over the payment rails, such as using specially configured infrastructure associated with payment networks 112 for the transmission of transaction messages that include sensitive financial data and information, such as identified payment credentials. In some instances, the transmitting device 220 may be configured to transmit data to issuing institutions 110, acquiring institutions 114, payment networks 112, and other entities via alternative networks, such as the Internet. In some embodiments, the transmitting device 220 may be comprised of multiple devices, such as different transmitting devices for transmitting data over different networks, such as a first transmitting device for transmitting data over the payment rails and a second transmitting device for transmitting data over the Internet. The transmitting device 220 may electronically transmit data signals that have data superimposed that may be parsed by a receiving computing device. In some instances, the transmitting device 220 may include one or more modules for superimposing, encoding, or otherwise formatting data into data signals suitable for transmission.

The transmitting device 220 may be configured to electronically transmit data signals to issuing institutions 110 or service providers that are superimposed or otherwise encoded with an authentication request, which may include at least a transaction amount, device identifier, and one or more codes, such as a disbursement code and a provider code. The transmitting device 220 may also be configured to electronically transmit data signals to acquiring institutions 114 that are superimposed or otherwise encoded with withdrawal requests. Withdrawal requests may be formatted using traditional formatting rules and standards used in the submission of withdrawal requests from an automated teller machine 102, and may include at least a transaction account number (e.g., received from an issuing institution 110 via the receiving device 202) and the transaction amount. In some instances, the withdrawal request may also include a personal identification number, which may be predetermined (e.g., and stored in the ATM 102 and identified by the querying module 214).

The automated teller machine 102 may also include a dispensing device 222. The dispensing device 222 may be configured to dispense payment instruments to a user of the automated teller machine 102, such as the recipient 104. The dispensing device 222 may be configured to dispense payment instruments having a value equivalent to a transaction amount, such as the value of a transaction amount for a cardless withdrawal. For instance, if a withdrawal request for a cardless withdrawal is approved, the dispensing device 222 may be configured to dispense cash having the value of the transaction amount included in the approved withdrawal request.

The automated teller machine 102 may also include a memory 224. The memory 224 may be configured to store data for use by the automated teller machine 102 in performing the functions discussed herein. The memory 224 may be configured to store data using suitable data formatting methods and schema and may be any suitable type of memory, such as read-only memory, random access memory, etc. The memory 224 may include, for example, encryption keys and algorithms, communication protocols and standards, data formatting standards and protocols, program code for modules and application programs of the processing device, and other data that may be suitable for use by the automated teller machine 102 in the performance of the functions disclosed herein as will be apparent to persons having skill in the relevant art. In some embodiments, the memory 224 may be comprised of or may otherwise include a relational database that utilizes structured query language for the storage, identification, modifying, updating, accessing, etc. of structured data sets stored therein.

### Process for Initiating Cardless Withdrawal at an Automated Teller Machine

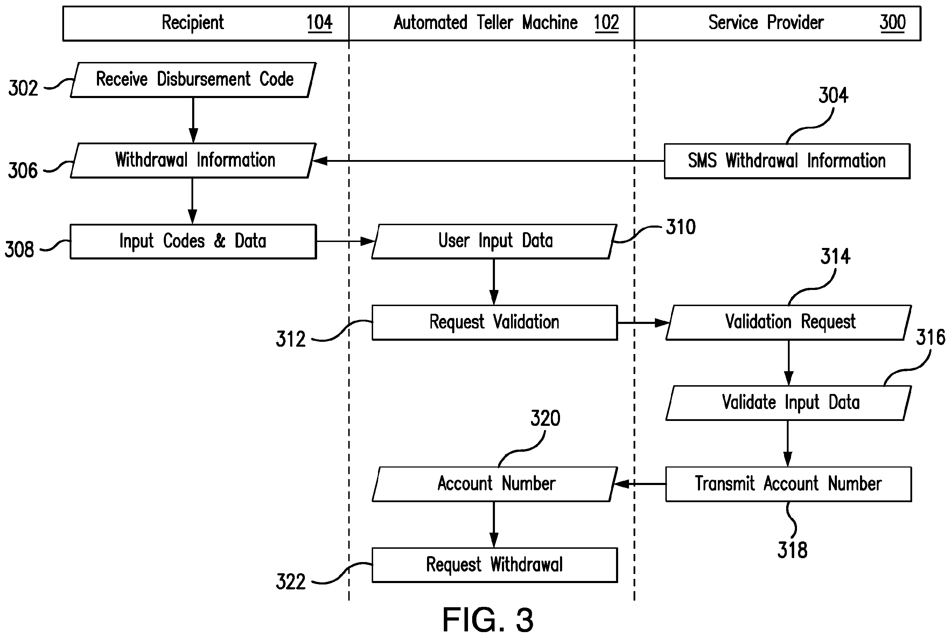

FIG. 3 illustrates a process for the initiation of a withdrawal request at the automated teller machine (ATM) 102 in the system 100 of FIG. 1 using cardless withdrawal as discussed herein.

In step 302, the recipient 104 may receive a disbursement code from a disbursing entity 106. The code may be received via a computing device 108 associated with the recipient 104, such as may be received via a short messaging service (SMS) message. In some instances, the disbursement code may be accompanied by the transaction amount to be disbursed to the recipient 104. In some cases, the disbursement code may be a four-digit numerical value, or other type of code, such as an alphanumeric code, which may be input by the recipient 104 into the ATM 102 using an input device 216 thereof. In an exemplary embodiment, the disbursement code may be unique to the specific disbursement.

In step 304, a service provider 300 associated with the ATM 102 and/or the issuing institution 110 may electronically transmit an SMS message to the recipient 104 with information on how to withdrawal their disbursement. In some instances, the information may include a provider code, which may be a four-digit numerical value or other type of code that is associated with the service provider 300. In some cases, the information may also include an address or other information for use by the recipient 104 in finding an ATM 102 with which the withdrawal can be made. In some embodiments, the withdrawal information may include the disbursement code. In such embodiments, step 302 may be optional. In step 306, the recipient 104 may receive the withdrawal information.

In step 308, the recipient 104 may input at least the disbursement code, provider code, transaction amount, and device identifier associated with the computing device 108 into the ATM 102 via an input device 216. In step 310, the ATM 102 may receive the user input data via the input device 216. In step 312, the transmitting device 220 of the ATM 102 may electronically transmit a validation request to the service provider 300. The validation request may include at least the user input data received from the recipient 104. In some cases, the provider code may be used by the ATM to identify the service provider 300. In some such cases, the provider code may not be included in the validation request. In step 314, the service provider 300 may receive the validation request.

In step 316, the service provider 300 may validate the input data to authenticate the recipient 104 as the intended recipient of the associated funds. The validation may include the comparison of the data provided by the recipient 104 and included in the validation request with data provided by the disbursing entity 106, such as by validating that the transaction amount, disbursement code, and device identifier. As part of the validation, the service provider 300 may identify a transaction account number associated with the disbursement. In some instances, the transaction account number may be a controlled payment number. In step 318, the service provider 300 may electronically transmit the transaction account number and an indication that the validation was successful to the ATM 102.

In step 320, the receiving device 202 of the ATM 102 may receive the indication of the successful validation as well as the transaction account number. In step 322, the transmitting device 220 of the ATM 102 may electronically transmit a withdrawal request to the acquiring institution 114. The withdrawal request may include at least the transaction account number provided by the service provider 300 and the transaction amount submitted by the recipient 104. In some instances, the withdrawal request may also include a personal identification number (PIN). In such instances, the PIN may be predetermined, such as may be stored locally in the ATM 102 (e.g., in the memory 224 or a provider profile 208) or provided by the service provider 300 with the transaction account number.

### Process for Cardless Disbursement of Funds from an Automated Teller Machine

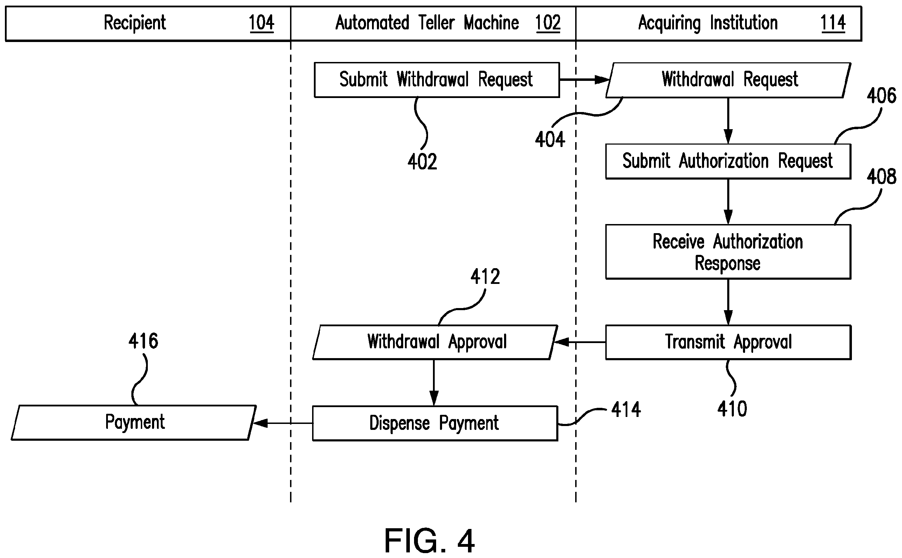

FIG. 4 illustrates a process for the disbursement of funds from an automated teller machine (ATM) 102 to a recipient 104 performed without the use of a payment card.

In step 402, the ATM 102 may submit a withdrawal request to the acquiring institution 114 associated therewith. The withdrawal request may include at least a transaction account number and a transaction amount, such as may be received by the ATM 102 in performing the process illustrated in FIG. 3 and discussed above. In some instances, the withdrawal request may also include a personal identification number (PIN). The withdrawal request may be submitted to the acquiring institution 114 using traditional methods and data formats used in the requesting of withdrawal of funds from an ATM 102. In step 404, the acquiring institution 104 may receive the withdrawal request.

In step 406, the acquiring institution 114 may submit an authorization request for the payment of funds to the acquiring institution 114, funded via the transaction account associated with the transaction account number included in the withdrawal request. The authorization request may be a specially formatted transaction message that is formatted pursuant to one or more standards governing the exchange of financial transaction messages, such as the ISO 8583 or ISO 20022 standards. The authorization request may have a message type indicator indicative of an authorization request and a plurality of data elements including data elements configured to store the transaction account number, transaction amount, and PIN, if applicable. The authorization request may be submitted to the payment network 112 using payment rails associated therewith.

In step 408, the acquiring institution 114 may receive an authorization response from the payment network 112. The authorization response may include a data element configured to store a response code indicative of approval of the transaction. In step 410, the acquiring institution 114 may electronically transmit a data signal to the ATM 102 indicating approval of the withdrawal request. In step 412, the receiving device 202 of the ATM 102 may receive the approval. In step 414, the dispensing device 222 of the ATM 102 may dispense cash to the recipient 104 having the value of the approved transaction amount. In step 416, the recipient 104 may receive the cash, which may thus be received by the recipient 104 from the ATM 102 without the use a payment card.

### Exemplary Method for Cardless Withdrawal from an Automated Teller Machine

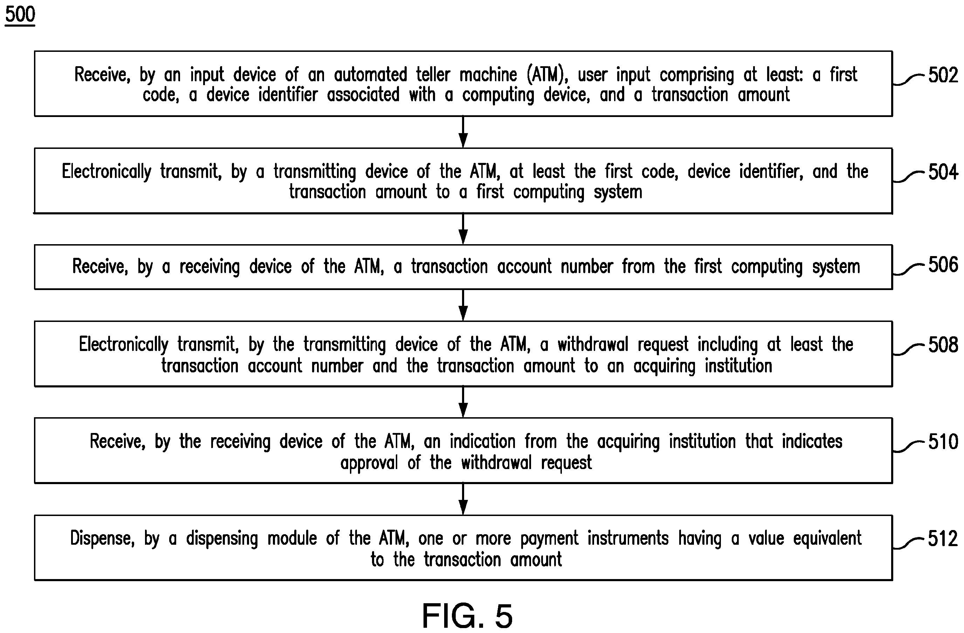

FIG. 5 illustrates a method 500 for the withdrawal of payment from an automated teller machine without the use of a payment card via the use of data directly associated with the intended recipient.

In step 502, user input may be received by an input device (e.g., the input device 216) of an automated teller machine (ATM) (e.g., the automated teller machine 102), where the user input comprises at least: a first code, a device identifier associated with a computing device (e.g., the computing device 108), and a transaction amount. In step 504, at least the first code, device identifier, and the transaction amount may be electronically transmitted by a transmitting device (e.g., the transmitting device 220) of the ATM to a first computing system (e.g., the issuing institution 110 or service provider 300).

In step 506, a transaction account number may be received by a receiving device (e.g., the receiving device 202) of the ATM from the first computing system. In step 508, a withdrawal request may be electronically transmitted by the transmitting device of the ATM to an acquiring institution (e.g., the acquiring institution 114), wherein the withdrawal request includes at least the transaction account number and the transaction amount.

In step 510, an indication may be received by the receiving device of the ATM from the acquiring institution that indicates approval of the withdrawal request. In step 512, one or more payment instruments may be dispensed by a dispensing module (e.g., the dispensing device 222) of the ATM that have a value equivalent to the transaction amount.

In one embodiment, the method 500 may further include: storing, in a provider database (e.g., the provider database 206) of the ATM, a plurality of provider profiles (e.g., provider profiles 208), wherein each profile is related to a service provider (e.g., the service provider 300) and includes a structured data set including at least a provider code and a communication address; and executing, by a querying module (e.g., the querying module 214) of the ATM, a query on the provider database to identify a specific provider profile where the included provider code corresponds to the first code, wherein the electronic transmission to the first computing system is transmitted to the communication address included in the specific provider profile. In some embodiments, the withdrawal request may further include a predetermined personal identification number. In a further embodiment, the method 500 may also include storing, in a memory (e.g., the memory 224) of the ATM, data indicating an association between the first code and the predetermined personal identification number.

In one embodiment, the device identifier may be a telephone number. In a further embodiment, the computing device may be a mobile computing device configured to receive a short messaging service message at the telephone number that includes at least the first code and transaction amount. In some embodiments, the method 500 may further include: receiving, by the input device of the ATM, a user request for cardless withdrawal; and displaying, by a display device (e.g., the display device 218) of the ATM, a prompt for user input of the first code, the device identifier, and the transaction amount, wherein the prompt is displayed prior to receipt of the user input.

In one embodiment, the user input may further include a disbursement code, and the electronic transmission to the first computing system may further include the disbursement code. In some embodiments, receiving the transaction account number may include receiving an indication of authentication of the first code, device identifier, and transaction amount. In one embodiment, the first code may be a four digit numeric code.

### Payment Transaction Processing System and Process

FIG. 6 illustrates a transaction processing system and a process 600 for the processing of payment transactions in the system, which may include the processing of thousands, millions, or even billions of transactions during a given period (e.g., hourly, daily, weekly, etc.). The process 600 and steps included therein may be performed by one or more components of the system 100 discussed above, such as the automated teller machine 102, disbursing entity 106, issuing institution 110, payment network 112, acquiring institution 114, etc. The processing of payment transactions using the system and process 600 illustrated in FIG. 6 and discussed below may utilize the payment rails, which may be comprised of the computing devices and infrastructure utilized to perform the steps of the process 600 as specially configured and programmed by the entities discussed below, including the transaction processing server 612, which may be associated with one or more payment networks configured to processing payment transactions. It will be apparent to persons having skill in the relevant art that the process 600 may be incorporated into the processes illustrated in FIGS. 3-5, discussed above, with respect to the step or steps involved in the processing of a payment transaction. In addition, the entities discussed herein for performing the process 600 may include one or more computing devices or systems configured to perform the functions discussed below. For instance, the merchant 606 may be comprised of one or more point of sale devices, a local communication network, a computing server, an automated teller machine, and other devices configured to perform the functions discussed below.

In step 620, an issuing financial institution 602 may issue a payment card or other suitable payment instrument to a consumer 604. The issuing financial institution may be a financial institution, such as a bank, or other suitable type of entity that administers and manages payment accounts and/or payment instruments for use with payment accounts that can be used to fund payment transactions. The consumer 604 may have a transaction account with the issuing financial institution 602 for which the issued payment card is associated, such that, when used in a payment transaction, the payment transaction is funded by the associated transaction account. In some embodiments, the payment card may be issued to the consumer 604 physically. In other embodiments, the payment card may be a virtual payment card or otherwise provisioned to the consumer 604 in an electronic format.

In step 622, the consumer 604 may present the issued payment card to a merchant 606 for use in funding a payment transaction. The merchant 606 may be a business, another consumer, or any entity that may engage in a payment transaction with the consumer 604. The payment card may be presented by the consumer 604 via providing the physical card to the merchant 606, electronically transmitting (e.g., via near field communication, wireless transmission, or other suitable electronic transmission type and protocol) payment details for the payment card, or initiating transmission of payment details to the merchant 606 via a third party. The merchant 606 may receive the payment details (e.g., via the electronic transmission, via reading them from a physical payment card, etc.), which may include at least a transaction account number associated with the payment card and/or associated transaction account. In some instances, the payment details may include one or more application cryptograms, which may be used in the processing of the payment transaction.

In step 624, the merchant 606 may enter transaction details into a point of sale computing system. The transaction details may include the payment details provided by the consumer 604 associated with the payment card and additional details associated with the transaction, such as a transaction amount, time and/or date, product data, offer data, loyalty data, reward data, merchant data, consumer data, point of sale data, etc. Transaction details may be entered into the point of sale system of the merchant 606 via one or more input devices, such as an optical bar code scanner configured to scan product bar codes, a keyboard configured to receive product codes input by a user, etc. The merchant point of sale system may be a specifically configured computing device and/or special purpose computing device intended for the purpose of processing electronic financial transactions and communicating with a payment network (e.g., via the payment rails). The merchant point of sale system may be an electronic device upon which a point of sale system application is run, wherein the application causes the electronic device to receive and communicated electronic financial transaction information to a payment network. In some embodiments, the merchant 606 may be an online retailer in an e-commerce transaction. In such embodiments, the transaction details may be entered in a shopping cart or other repository for storing transaction data in an electronic transaction as will be apparent to persons having skill in the relevant art.

In step 626, the merchant 606 may electronically transmit a data signal superimposed with transaction data to a gateway processor 608. The gateway processor 608 may be an entity configured to receive transaction details from a merchant 606 for formatting and transmission to an acquiring financial institution 610. In some instances, a gateway processor 608 may be associated with a plurality of merchants 606 and a plurality of acquiring financial institutions 610. In such instances, the gateway processor 608 may receive transaction details for a plurality of different transactions involving various merchants, which may be forwarded on to appropriate acquiring financial institutions 610. By having relationships with multiple acquiring financial institutions 610 and having the requisite infrastructure to communicate with financial institutions using the payment rails, such as using application programming interfaces associated with the gateway processor 608 or financial institutions used for the submission, receipt, and retrieval of data, a gateway processor 608 may act as an intermediary for a merchant 606 to be able to conduct payment transactions via a single communication channel and format with the gateway processor 608, without having to maintain relationships with multiple acquiring financial institutions 610 and payment processors and the hardware associated thereto. Acquiring financial institutions 610 may be financial institutions, such as banks, or other entities that administers and manages payment accounts and/or payment instruments for use with payment accounts. In some instances, acquiring financial institutions 610 may manage transaction accounts for merchants 606. In some cases, a single financial institution may operate as both an issuing financial institution 602 and an acquiring financial institution 610.

The data signal transmitted from the merchant 606 to the gateway processor 608 may be superimposed with the transaction details for the payment transaction, which may be formatted based on one or more standards. In some embodiments, the standards may be set forth by the gateway processor 608, which may use a unique, proprietary format for the transmission of transaction data to/from the gateway processor 608. In other embodiments, a public standard may be used, such as the International Organization for Standardization's ISO 8583 or ISO 20022 standards. The standard may indicate the types of data that may be included, the formatting of the data, how the data is to be stored and transmitted, and other criteria for the transmission of the transaction data to the gateway processor 608.

In step 628, the gateway processor 608 may parse the transaction data signal to obtain the transaction data superimposed thereon and may format the transaction data as necessary. The formatting of the transaction data may be performed by the gateway processor 608 based on the proprietary standards of the gateway processor 608 or an acquiring financial institution 610 associated with the payment transaction. The proprietary standards may specify the type of data included in the transaction data and the format for storage and transmission of the data. The acquiring financial institution 610 may be identified by the gateway processor 608 using the transaction data, such as by parsing the transaction data (e.g., deconstructing into data elements) to obtain an account identifier included therein associated with the acquiring financial institution 610. In some instances, the gateway processor 608 may then format the transaction data based on the identified acquiring financial institution 610, such as to comply with standards of formatting specified by the acquiring financial institution 610. In some embodiments, the identified acquiring financial institution 610 may be associated with the merchant 606 involved in the payment transaction, and, in some cases, may manage a transaction account associated with the merchant 606.

In step 630, the gateway processor 608 may electronically transmit a data signal superimposed with the formatted transaction data to the identified acquiring financial institution 610. The acquiring financial institution 610 may receive the data signal and parse the signal to obtain the formatted transaction data superimposed thereon. In step 632, the acquiring financial institution may generate an authorization request for the payment transaction based on the formatted transaction data. The authorization request may be a specially formatted transaction message that is formatted pursuant to one or more standards, such as the ISO 8683 standard and standards set forth by a payment processor used to process the payment transaction, such as a payment network. The authorization request may be a transaction message that includes a message type indicator indicative of an authorization request, which may indicate that the merchant 606 involved in the payment transaction is requesting payment or a promise of payment from the issuing financial institution 602 for the transaction. The authorization request may include a plurality of data elements, each data element being configured to store data as set forth in the associated standards, such as for storing an account number, application cryptogram, transaction amount, issuing financial institution 602 information, etc.

In step 634, the acquiring financial institution 610 may electronically transmit the authorization request to a transaction processing server 612 for processing. The transaction processing server 612 may be comprised of one or more computing devices as part of a payment network configured to process payment transactions. In some embodiments, the authorization request may be transmitted by a transaction processor at the acquiring financial institution 610 or other entity associated with the acquiring financial institution. The transaction processor may be one or more computing devices that include a plurality of communication channels for communication with the transaction processing server 612 for the transmission of transaction messages and other data to and from the transaction processing server 612. In some embodiments, the payment network associated with the transaction processing server 612 may own or operate each transaction processor such that the payment network may maintain control over the communication of transaction messages to and from the transaction processing server 612 for network and informational security.

In step 636, the transaction processing server 612 may perform value-added services for the payment transaction. Value-added services may be services specified by the issuing financial institution 602 that may provide additional value to the issuing financial institution 602 or the consumer 604 in the processing of payment transactions. Value-added services may include, for example, fraud scoring, transaction or account controls, account number mapping, offer redemption, loyalty processing, etc. For instance, when the transaction processing server 612 receives the transaction, a fraud score for the transaction may be calculated based on the data included therein and one or more fraud scoring algorithms and/or engines. In some instances, the transaction processing server 612 may first identify the issuing financial institution 602 associated with the transaction, and then identify any services indicated by the issuing financial institution 602 to be performed. The issuing financial institution 602 may be identified, for example, by data included in a specific data element included in the authorization request, such as an issuer identification number. In another example, the issuing financial institution 602 may be identified by the primary account number stored in the authorization request, such as by using a portion of the primary account number (e.g., a bank identification number) for identification.

In step 638, the transaction processing server 612 may electronically transmit the authorization request to the issuing financial institution 602. In some instances, the authorization request may be modified, or additional data included in or transmitted accompanying the authorization request as a result of the performance of value-added services by the transaction processing server 612. In some embodiments, the authorization request may be transmitted to a transaction processor (e.g., owned or operated by the transaction processing server 612) situated at the issuing financial institution 602 or an entity associated thereof, which may forward the authorization request to the issuing financial institution 602.

In step 640, the issuing financial institution 602 may authorize the transaction account for payment of the payment transaction. The authorization may be based on an available credit amount for the transaction account and the transaction amount for the payment transaction, fraud scores provided by the transaction processing server 612, and other considerations that will be apparent to persons having skill in the relevant art. The issuing financial institution 602 may modify the authorization request to include a response code indicating approval (e.g., or denial if the transaction is to be denied) of the payment transaction. The issuing financial institution 602 may also modify a message type indicator for the transaction message to indicate that the transaction message is changed to be an authorization response. In step 642, the issuing financial institution 602 may transmit (e.g., via a transaction processor) the authorization response to the transaction processing server 612.

In step 644, the transaction processing server 612 may forward the authorization response to the acquiring financial institution 610 (e.g., via a transaction processor). In step 646, the acquiring financial institution may generate a response message indicating approval or denial of the payment transaction as indicated in the response code of the authorization response, and may transmit the response message to the gateway processor 608 using the standards and protocols set forth by the gateway processor 608. In step 648, the gateway processor 608 may forward the response message to the merchant 606 using the appropriate standards and protocols. In step 650, assuming the transaction was approved, the merchant 606 may then provide the products purchased by the consumer 604 as part of the payment transaction to the consumer 604.

In some embodiments, once the process 600 has completed, payment from the issuing financial institution 602 to the acquiring financial institution 610 may be performed. In some instances, the payment may be made immediately or within one business day. In other instances, the payment may be made after a period of time, and in response to the submission of a clearing request from the acquiring financial institution 610 to the issuing financial institution 602 via the transaction processing server 612. In such instances, clearing requests for multiple payment transactions may be aggregated into a single clearing request, which may be used by the transaction processing server 612 to identify overall payments to be made by whom and to whom for settlement of payment transactions.

In some instances, the system may also be configured to perform the processing of payment transactions in instances where communication paths may be unavailable. For example, if the issuing financial institution is unavailable to perform authorization of the transaction account (e.g., in step 640), the transaction processing server 612 may be configured to perform authorization of transactions on behalf of the issuing financial institution 602. Such actions may be referred to as "stand-in processing," where the transaction processing server "stands in" as the issuing financial institution 602. In such instances, the transaction processing server 612 may utilize rules set forth by the issuing financial institution 602 to determine approval or denial of the payment transaction, and may modify the transaction message accordingly prior to forwarding to the acquiring financial institution 610 in step 644. The transaction processing server 612 may retain data associated with transactions for which the transaction processing server 612 stands in, and may transmit the retained data to the issuing financial institution 602 once communication is reestablished. The issuing financial institution 602 may then process transaction accounts accordingly to accommodate for the time of lost communication.

In another example, if the transaction processing server 612 is unavailable for submission of the authorization request by the acquiring financial institution 610, then the transaction processor at the acquiring financial institution 610 may be configured to perform the processing of the transaction processing server 612 and the issuing financial institution 602. The transaction processor may include rules and data suitable for use in making a determination of approval or denial of the payment transaction based on the data included therein. For instance, the issuing financial institution 602 and/or transaction processing server 612 may set limits on transaction type, transaction amount, etc. that may be stored in the transaction processor and used to determine approval or denial of a payment transaction based thereon. In such instances, the acquiring financial institution 610 may receive an authorization response for the payment transaction even if the transaction processing server 612 is unavailable, ensuring that transactions are processed and no downtime is experienced even in instances where communication is unavailable. In such cases, the transaction processor may store transaction details for the payment transactions, which may be transmitted to the transaction processing server 612 (e.g., and from there to the associated issuing financial institutions 602) once communication is reestablished.

In some embodiments, transaction processors may be configured to include a plurality of different communication channels, which may utilize multiple communication cards and/or devices, to communicate with the transaction processing server 612 for the sending and receiving of transaction messages. For example, a transaction processor may be comprised of multiple computing devices, each having multiple communication ports that are connected to the transaction processing server 612. In such embodiments, the transaction processor may cycle through the communication channels when transmitting transaction messages to the transaction processing server 612, to alleviate network congestion and ensure faster, smoother communications. Furthermore, in instances where a communication channel may be interrupted or otherwise unavailable, alternative communication channels may thereby be available, to further increase the uptime of the network.

In some embodiments, transaction processors may be configured to communicate directly with other transaction processors. For example, a transaction processor at an acquiring financial institution 610 may identify that an authorization request involves an issuing financial institution 602 (e.g., via the bank identification number included in the transaction message) for which no value-added services are required. The transaction processor at the acquiring financial institution 610 may then transmit the authorization request directly to the transaction processor at the issuing financial institution 602 (e.g., without the authorization request passing through the transaction processing server 612), where the issuing financial institution 602 may process the transaction accordingly.

The methods discussed above for the processing of payment transactions that utilize multiple methods of communication using multiple communication channels, and includes fail safes to provide for the processing of payment transactions at multiple points in the process and at multiple locations in the system, as well as redundancies to ensure that communications arrive at their destination successfully even in instances of interruptions, may provide for a robust system that ensures that payment transactions are always processed successfully with minimal error and interruption. This advanced network and its infrastructure and topology may be commonly referred to as "payment rails," where transaction data may be submitted to the payment rails from merchants at millions of different points of sale, to be routed through the infrastructure to the appropriate transaction processing servers 612 for processing. The payment rails may be such that a general purpose computing device may be unable to properly format or submit communications to the rails, without specialized programming and/or configuration. Through the specialized purposing of a computing device, the computing device may be configured to submit transaction data to the appropriate entity (e.g., a gateway processor 608, acquiring financial institution 610, etc.) for processing using this advanced network, and to quickly and efficiently receive a response regarding the ability for a consumer 604 to fund the payment transaction.

### Computer System Architecture

FIG. 7 illustrates a computer system 700 in which embodiments of the present disclosure, or portions thereof, may be implemented as computer-readable code. For example, the automated teller machine 102 of FIG. 1 may be implemented in the computer system 700 using hardware, software, firmware, non-transitory computer readable media having instructions stored thereon, or a combination thereof and may be implemented in one or more computer systems or other processing systems. Hardware, software, or any combination thereof may embody modules and components used to implement the methods of FIGS. 3-6.

If programmable logic is used, such logic may execute on a commercially available processing platform configured by executable software code to become a specific purpose computer or a special purpose device (e.g., programmable logic array, application-specific integrated circuit, etc.). A person having ordinary skill in the art may appreciate that embodiments of the disclosed subject matter can be practiced with various computer system configurations, including multi-core multiprocessor systems, minicomputers, mainframe computers, computers linked or clustered with distributed functions, as well as pervasive or miniature computers that may be embedded into virtually any device. For instance, at least one processor device and a memory may be used to implement the above described embodiments.

A processor unit or device as discussed herein may be a single processor, a plurality of processors, or combinations thereof. Processor devices may have one or more processor "cores." The terms "computer program medium," "non-transitory computer readable medium," and "computer usable medium" as discussed herein are used to generally refer to tangible media such as a removable storage unit 718, a removable storage unit 722, and a hard disk installed in hard disk drive 712.

Various embodiments of the present disclosure are described in terms of this example computer system 700. After reading this description, it will become apparent to a person skilled in the relevant art how to implement the present disclosure using other computer systems and/or computer architectures. Although operations may be described as a sequential process, some of the operations may in fact be performed in parallel, concurrently, and/or in a distributed environment, and with program code stored locally or remotely for access by single or multi-processor machines. In addition, in some embodiments the order of operations may be rearranged without departing from the spirit of the disclosed subject matter.

Processor device 704 may be a special purpose or a general purpose processor device specifically configured to perform the functions discussed herein. The processor device 704 may be connected to a communications infrastructure 706, such as a bus, message queue, network, multi-core message-passing scheme, etc. The network may be any network suitable for performing the functions as disclosed herein and may include a local area network (LAN), a wide area network (WAN), a wireless network (e.g., WiFi), a mobile communication network, a satellite network, the Internet, fiber optic, coaxial cable, infrared, radio frequency (RF), or any combination thereof. Other suitable network types and configurations will be apparent to persons having skill in the relevant art. The computer system 700 may also include a main memory 708 (e.g., random access memory, read-only memory, etc.), and may also include a secondary memory 710. The secondary memory 710 may include the hard disk drive 712 and a removable storage drive 714, such as a floppy disk drive, a magnetic tape drive, an optical disk drive, a flash memory, etc.

The removable storage drive 714 may read from and/or write to the removable storage unit 718 in a well-known manner. The removable storage unit 718 may include a removable storage media that may be read by and written to by the removable storage drive 714. For example, if the removable storage drive 714 is a floppy disk drive or universal serial bus port, the removable storage unit 718 may be a floppy disk or portable flash drive, respectively. In one embodiment, the removable storage unit 718 may be non-transitory computer readable recording media.

In some embodiments, the secondary memory 710 may include alternative means for allowing computer programs or other instructions to be loaded into the computer system 700, for example, the removable storage unit 722 and an interface 720. Examples of such means may include a program cartridge and cartridge interface (e.g., as found in video game systems), a removable memory chip (e.g., EEPROM, PROM, etc.) and associated socket, and other removable storage units 722 and interfaces 720 as will be apparent to persons having skill in the relevant art.

Data stored in the computer system 700 (e.g., in the main memory 708 and/or the secondary memory 710) may be stored on any type of suitable computer readable media, such as optical storage (e.g., a compact disc, digital versatile disc, Blu-ray disc, etc.) or magnetic tape storage (e.g., a hard disk drive). The data may be configured in any type of suitable database configuration, such as a relational database, a structured query language (SQL) database, a distributed database, an object database, etc. Suitable configurations and storage types will be apparent to persons having skill in the relevant art.

The computer system 700 may also include a communications interface 724. The communications interface 724 may be configured to allow software and data to be transferred between the computer system 700 and external devices. Exemplary communications interfaces 724 may include a modem, a network interface (e.g., an Ethernet card), a communications port, a PCMCIA slot and card, etc. Software and data transferred via the communications interface 724 may be in the form of signals, which may be electronic, electromagnetic, optical, or other signals as will be apparent to persons having skill in the relevant art. The signals may travel via a communications path 726, which may be configured to carry the signals and may be implemented using wire, cable, fiber optics, a phone line, a cellular phone link, a radio frequency link, etc.

The computer system 700 may further include a display interface 702. The display interface 702 may be configured to allow data to be transferred between the computer system 700 and external display 730. Exemplary display interfaces 702 may include high-definition multimedia interface (HDMI), digital visual interface (DVI), video graphics array (VGA), etc. The display 730 may be any suitable type of display for displaying data transmitted via the display interface 702 of the computer system 700, including a cathode ray tube (CRT) display, liquid crystal display (LCD), light-emitting diode (LED) display, capacitive touch display, thin-film transistor (TFT) display, etc.

Computer program medium and computer usable medium may refer to memories, such as the main memory 708 and secondary memory 710, which may be memory semiconductors (e.g., DRAMs, etc.). These computer program products may be means for providing software to the computer system 700. Computer programs (e.g., computer control logic) may be stored in the main memory 708 and/or the secondary memory 710. Computer programs may also be received via the communications interface 724. Such computer programs, when executed, may enable computer system 700 to implement the present methods as discussed herein. In particular, the computer programs, when executed, may enable processor device 704 to implement the methods illustrated by FIGS. 3-6, as discussed herein. Accordingly, such computer programs may represent controllers of the computer system 700. Where the present disclosure is implemented using software, the software may be stored in a computer program product and loaded into the computer system 700 using the removable storage drive 714, interface 720, and hard disk drive 712, or communications interface 724.

The processor device 704 may comprise one or more modules or engines configured to perform the functions of the computer system 700. Each of the modules or engines may be implemented using hardware and, in some instances, may also utilize software, such as corresponding to program code and/or programs stored in the main memory 708 or secondary memory 710. In such instances, program code may be compiled by the processor device 704 (e.g., by a compiling module or engine) prior to execution by the hardware of the computer system 700. For example, the program code may be source code written in a programming language that is translated into a lower level language, such as assembly language or machine code, for execution by the processor device 704 and/or any additional hardware components of the computer system 700. The process of compiling may include the use of lexical analysis, preprocessing, parsing, semantic analysis, syntax-directed translation, code generation, code optimization, and any other techniques that may be suitable for translation of program code into a lower level language suitable for controlling the computer system 700 to perform the functions disclosed herein. It will be apparent to persons having skill in the relevant art that such processes result in the computer system 700 being a specially configured computer system 700 uniquely programmed to perform the functions discussed above.

## Claims

1. A method for cardless withdrawal from an automated teller machine, comprising:
receiving (502), by an input device of an automated teller machine (ATM), user input comprising at least: a first code transmitted to a computing device by a disbursing entity, a device identifier associated with the computing device, and a transaction amount, wherein the first code is unique to the cardless withdrawal from the ATM;
electronically transmitting (504), by a transmitting device of the ATM, at least the first code, device identifier, and the transaction amount to a first computing system;
receiving (506), by a receiving device of the ATM and when the first code, device identifier and transaction amount are authenticated by the first computing system, a transaction account number from the first computing system;
electronically transmitting (508), by the transmitting device of the ATM, a withdrawal request including at least the transaction account number and the transaction amount to an acquiring institution;
receiving (510), by the receiving device of the ATM, an indication from the acquiring institution that indicates approval of the withdrawal request; and
dispensing (512), by a dispensing module of the ATM, one or more payment instruments having a value equivalent to the transaction amount.

2. The method of claim 1, further comprising:
storing, in a provider database of the ATM, a plurality of provider profiles, wherein each profile is related to a service provider and includes a structured data set including at least a provider code and a communication address; and
executing, by a querying module of the ATM, a query on the provider database to identify a specific provider profile where the included provider code corresponds to the first code, wherein
the electronic transmission to the first computing system is transmitted to the communication address included in the specific provider profile.

3. The method of claim 1, wherein the withdrawal request further includes a predetermined personal identification number.

4. The method of claim 3, further comprising:
storing, in a memory of the ATM, data indicating an association between the first code and the predetermined personal identification number.

5. The method of claim 1, wherein the device identifier is a telephone number.

6. The method of claim 5, wherein the computing device is a mobile computing device configured to receive a short messaging service message at the telephone number that includes at least the first code and transaction amount.

7. The method of claim 1, further comprising:
receiving, by the input device of the ATM, a user request for cardless withdrawal; and
displaying, by a display device of the ATM, a prompt for user input of the first code, the device identifier, and the transaction amount, wherein
the prompt is displayed prior to receipt of the user input.

8. The method of claim 1, wherein
the user input further includes a disbursement code, and
the electronic transmission to the first computing system further includes the disbursement code.

9. The method of claim 1, wherein receiving the transaction account number includes receiving an indication of authentication of the first code, device identifier, and transaction amount.

10. The method of claim 1, wherein the first code is a four digit numeric code.

11. A system for cardless withdrawal from an automated teller machine, comprising:
a dispensing module (222) of an automated teller machine (ATM);
an input device (216) of the ATM configured to receive user input comprising at least: a first code transmitted to a computing device by a disbursing entity, a device identifier associated with the computing device, and a transaction amount, wherein the first code is unique to the cardless withdrawal from the ATM;
a transmitting device (220) of the ATM configured to electronically transmit at least the first code, device identifier, and the transaction amount to a first computing system; and
a receiving device (202) of the ATM configured to receive, when the first code, device identifier and transaction amount are authenticated by the first computing system, a transaction account number from the first computing system, wherein
the transmitting device of the ATM is further configured to electronically transmit a withdrawal request including at least the transaction account number and the transaction amount to an acquiring institution,
the receiving device of the ATM is further configured to receive an indication from the acquiring institution that indicates approval of the withdrawal request, and
the dispensing module of the ATM is configured to dispense one or more payment instruments having a value equivalent to the transaction amount.

12. The system of claim 11, further comprising:
a provider database (206) of the ATM configured to store a plurality of provider profiles, wherein each profile is related to a service provider and includes a structured data set including at least a provider code and a communication address; and
a querying module (214) of the ATM configured to execute a query on the provider database to identify a specific provider profile where the included provider code corresponds to the first code, wherein
the electronic transmission to the first computing system is transmitted to the communication address included in the specific provider profile.

13. The system of claim 11, wherein the withdrawal request further includes a predetermined personal identification number.

14. The system of claim 13, further comprising:
a memory (224) of the ATM configured to store data indicating an association between the first code and the predetermined personal identification number.

15. The system of claim 11, wherein the device identifier is a telephone number.

## Patentansprüche

1. Verfahren für eine kartenlose Abhebung von einem Geldautomaten, das Folgendes umfasst:
Empfangen (502) durch eine Eingabevorrichtung eines Geldautomaten (ATM) einer Anwendereingabe, die zumindest Folgendes umfasst: einen ersten Code, der an eine Rechenvorrichtung durch eine Auszahlungsentität gesendet wird, eine Vorrichtungskennung, die der Rechenvorrichtung zugeordnet ist, und einen Transaktionsbetrag, wobei der erste Code für die kartenlose Abhebung von dem ATM eindeutig ist;
elektronisches Senden (504) durch eine Sendevorrichtung des ATM zumindest des ersten Codes, der Vorrichtungskennung und des Transaktionsbetrags an ein erstes Rechensystem;
Empfangen (506) durch eine Empfangsvorrichtung des ATM und dann, wenn der erste Code, die Vorrichtungskennung und der Transaktionsbetrag durch das erste Rechensystem authentifiziert wurden, einer Transaktionskontonummer von dem ersten Rechensystem;
elektronisches Senden (508) durch die Sendevorrichtung des ATM einer Abhebungsanforderung, die zumindest die Transaktionskontonummer und den Transaktionsbetrag enthält, an eine Erfassungsinstitution;
Empfangen (510) durch die Empfangsvorrichtung des ATM einer Angabe von der Erfassungsinstitution, die eine Genehmigung der Abhebungsanforderung angibt; und
Ausgeben (512) durch ein Ausgabemodul des ATM eines oder mehrerer Zahlungsmittel mit einem Wert, der gleich dem Transaktionsbetrag ist.

2. Verfahren nach Anspruch 1, das ferner Folgendes umfasst:
Speichern in einer Anbieterdatenbank des ATM mehrerer Anbieterprofile, wobei sich jedes Profil auf einen Dienstanbieter bezieht und eine strukturierte Datengruppe enthält, die zumindest einen Anbietercode und eine Kommunikationsadresse enthält; und
Ausführen durch ein Abfragemodul des ATM einer Abfrage auf der Anbieterdatenbank, um ein spezifisches Anbieterprofil zu identifizieren, wo der enthaltene Anbietercode dem ersten Code entspricht, wobei
die elektronische Übertragung an das erste Rechensystem an die Kommunikationsadresse gesendet wird, die in dem spezifischen Anbieterprofil enthalten ist.

3. Verfahren nach Anspruch 1, wobei die Abhebungsanforderung ferner eine vorgegebene persönliche Identifikationsnummer enthält.

4. Verfahren nach Anspruch 3, das ferner Folgendes umfasst:
Speichern in einem Speicher des ATM von Daten, die eine Zuordnung zwischen dem ersten Code und der vorgegebenen persönlichen Identifikationsnummer angeben.

5. Verfahren nach Anspruch 1, wobei die Vorrichtungskennung eine Telefonnummer ist.

6. Verfahren nach Anspruch 5, wobei die Rechenvorrichtung eine mobile Rechenvorrichtung ist, die konfiguriert ist, eine Nachricht eines Dienstes für Kurznachrichten an der Telefonnummer zu empfangen, die zumindest den ersten Code und einen Transaktionsbetrag enthält.

7. Verfahren nach Anspruch 1, das ferner Folgendes umfasst:
Empfangen durch die Eingabevorrichtung des ATM einer Anwenderanforderung für eine kartenlose Abhebung; und
Anzeigen durch eine Anzeigevorrichtung des ATM einer Aufforderung für eine Anwendereingabe des ersten Codes, der Vorrichtungskennung und des Transaktionsbetrags, wobei
die Aufforderung vor dem Empfang der Anwendereingabe angezeigt wird.

8. Verfahren nach Anspruch 1, wobei
die Anwendereingabe ferner einen Auszahlungscode enthält, und
die elektronische Übertragung an das erste Rechensystem ferner den Auszahlungscode enthält.

9. Verfahren nach Anspruch 1, wobei das Empfangen der Transaktionskontonummer enthält, eine Angabe einer Authentifizierung des ersten Codes, der Vorrichtungskennung und des Transaktionsbetrags zu empfangen.

10. Verfahren nach Anspruch 1, wobei der erste Code ein numerischer Code mit vier Ziffern ist.

11. System für eine kartenlose Abhebung von einem Geldautomaten, das Folgendes umfasst:
ein Ausgabemodul (222) eines Geldautomaten (ATM);
eine Eingabevorrichtung (216) des ATM, die konfiguriert ist, eine Anwendereingabe zu empfangen, die zumindest Folgendes umfasst: einen ersten Code, der an eine Rechenvorrichtung durch eine Ausgabeentität gesendet wird, eine Vorrichtungskennung, die der Rechenvorrichtung zugeordnet ist, und einen Transaktionsbetrag, wobei der erste Code für die kartenlose Abhebung von dem ATM eindeutig ist;
eine Sendevorrichtung (220) des ATM, die konfiguriert ist, zumindest den ersten Code, die Vorrichtungskennung und den Transaktionsbetrag an ein erstes Rechensystem elektronisch zu senden; und
eine Empfangsvorrichtung (202) des ATM, die konfiguriert ist, dann, wenn der erste Code, die Vorrichtungskennung und der Transaktionsbetrag durch das erste Rechensystem authentifiziert wurden, eine Transaktionskontonummer von dem ersten Rechensystem zu empfangen, wobei
die Sendevorrichtung des ATM ferner konfiguriert ist, eine Abhebungsanforderung, die zumindest die Transaktionskontonummer und den Transaktionsbetrag enthält, an eine Erfassungsinstitution elektronisch zu senden,
die Empfangsvorrichtung des ATM ferner konfiguriert ist, eine Angabe von der Erfassungsinstitution zu empfangen, die eine Genehmigung der Abhebungsanforderung angibt, und
das Ausgabemodul des ATM konfiguriert ist, ein oder mehrere Zahlungsmittel mit einem Wert, der gleich dem Transaktionsbetrag ist, auszugeben.

12. System nach Anspruch 11, das ferner Folgendes umfasst:
eine Anbieterdatenbank (206) des ATM, die konfiguriert ist, mehrere Anbieterprofile zu speichern, wobei sich jedes Profil auf einen Dienstanbieter bezieht und eine strukturierte Datengruppe enthält, die zumindest einen Anbietercode und eine Kommunikationsadresse enthält; und
ein Abfragemodul (214) des ATM, das konfiguriert ist, eine Abfrage auf der Anbieterdatenbank aufzuführen, um ein spezifisches Anbieterprofil zu identifizieren, wo der enthaltene Anbietercode dem ersten Code entspricht, wobei
die elektronische Übertragung an das erste Rechensystem an die Kommunikationsadresse gesendet wird, die in dem spezifischen Anbieterprofil enthalten ist.

13. System nach Anspruch 11, wobei die Abhebungsanforderung ferner eine vorgegebene persönliche Identifikationsnummer enthält.

14. System nach Anspruch 13, das ferner Folgendes umfasst:
einen Speicher (224) des ATM, der konfiguriert ist, Daten zu speichern, die eine Zuordnung zwischen dem ersten Code und der vorgegebenen persönlichen Identifikationsnummer angeben.

15. System nach Anspruch 11, wobei die Vorrichtungskennung eine Telefonnummer ist.

## Revendications

1. Procédé de retrait sans carte d'un guichet automatique bancaire, le procédé comprenant les étapes suivantes :
recevoir (502), par un dispositif d'entrée d'un guichet automatique bancaire (ATM), une entrée utilisateur comprenant au moins : un premier code transmis à un dispositif informatique par une entité de décaissement, un identifiant de dispositif associé au dispositif informatique, et un montant de transaction, où le premier code est unique pour le retrait sans carte de l'ATM ;
transmettre électroniquement (504), par un dispositif de transmission de l'ATM, au moins le premier code, l'identifiant du dispositif et le montant de la transaction à un premier système informatique ;
recevoir (506), par un dispositif de réception de l'ATM et lorsque le premier code, l'identifiant du dispositif et le montant de la transaction sont authentifiés par le premier système informatique, un numéro de compte de transaction provenant du premier système informatique ;
transmettre électroniquement (508), par le dispositif de transmission de l'ATM, une demande de retrait comprenant au moins le numéro de compte de transaction et le montant de la transaction à une institution de traitement des paiements ;
recevoir (510), par le dispositif de réception de l'ATM, une indication de l'institution de traitement des paiements qui indique l'approbation de la demande de retrait ; et
distribuer (512), par un module de distribution de l'ATM, un ou plusieurs instruments de paiement ayant une valeur équivalente au montant de la transaction.

2. Procédé selon la revendication 1, comprenant en outre les étapes suivantes :
stocker, dans une base de données de fournisseurs de l'ATM, une pluralité de profils de fournisseurs, où chaque profil est lié à un fournisseur de services et comprend un ensemble de données structurées comprenant au moins un code de fournisseur et une adresse de communication ; et
exécuter, par un module d'interrogation de l'ATM, une interrogation au niveau de la base de données de fournisseurs pour identifier un profil de fournisseur spécifique, où le code de fournisseur inclus correspond au premier code, où :
la transmission électronique au premier système informatique est transmise à l'adresse de communication incluse dans le profil de fournisseur spécifique.

3. Procédé selon la revendication 1, dans lequel la demande de retrait comprend en outre un numéro d'identification personnel prédéterminé.

4. Procédé selon la revendication 3, comprenant en outre l'étape suivante :
stocker, dans une mémoire de l'ATM, des données indiquant une association entre le premier code et le numéro d'identification personnel prédéterminé.

5. Procédé selon la revendication 1, dans lequel l'identifiant du dispositif est un numéro de téléphone.

6. Procédé selon la revendication 5, dans lequel le dispositif informatique est un dispositif informatique mobile configuré pour recevoir un message de service de minimessages au numéro de téléphone qui comprend au moins le premier code et le montant de la transaction.

7. Procédé selon la revendication 1, comprenant en outre l'étape suivante :
recevoir, par le dispositif d'entrée de l'ATM, une demande de l'utilisateur pour un retrait sans carte ; et
afficher, par un dispositif d'affichage de l'ATM, une invite pour l'entrée par l'utilisateur du premier code, de l'identifiant du dispositif et du montant de la transaction, où :
l'invite est affichée avant la réception de l'entrée de l'utilisateur.

8. Procédé selon la revendication 1, dans lequel :
l'entrée de l'utilisateur comprend en outre un code de décaissement, et
la transmission électronique au premier système informatique comprend en outre le code de décaissement.

9. Procédé selon la revendication 1, dans lequel la réception du numéro de compte de la transaction comprend la réception d'une indication d'authentification du premier code, de l'identifiant du dispositif et du montant de la transaction.

10. Procédé selon la revendication 1, dans lequel le premier code est un code numérique à quatre chiffres.

11. Système de retrait sans carte d'un guichet automatique bancaire, comprenant :
un module de distribution (222) d'un guichet automatique bancaire (ATM) ;
un dispositif d'entrée (216) de l'ATM configuré pour recevoir une entrée utilisateur comprenant au moins : un premier code transmis à un dispositif informatique par une entité de décaissement, un identifiant de dispositif associé au dispositif informatique, et un montant de transaction, où le premier code est unique pour le retrait sans carte de l'ATM ;
un dispositif de transmission (220) de l'ATM configuré pour transmettre électroniquement au moins le premier code, l'identifiant du dispositif et le montant de la transaction à un premier système informatique ; et
un dispositif de réception (202) de l'ATM configuré pour recevoir, lorsque le premier code, l'identifiant du dispositif et le montant de la transaction sont authentifiés par le premier système informatique, un numéro de compte de transaction provenant du premier système informatique, où :
le dispositif de transmission de l'ATM est en outre configuré pour transmettre électroniquement une demande de retrait comprenant au moins le numéro de compte de transaction et le montant de la transaction à une institution de traitement des paiements,
le dispositif de réception de l'ATM est en outre configuré pour recevoir une indication de l'institution de traitement des paiements qui indique l'approbation de la demande de retrait, et
le module de distribution de l'ATM est configuré pour distribuer un ou plusieurs instruments de paiement ayant une valeur équivalente au montant de la transaction.

12. Système selon la revendication 11, comprenant en outre :
une base de données de fournisseurs (206) de l'ATM configurée pour stocker une pluralité de profils de fournisseurs, où chaque profil est lié à un fournisseur de services et comprend un ensemble de données structurées incluant au moins un code de fournisseur et une adresse de communication ; et
un module d'interrogation (214) de l'ATM configuré pour exécuter une interrogation au niveau de la base de données de fournisseurs pour identifier un profil de fournisseur spécifique, où le code de fournisseur inclus correspond au premier code, où :
la transmission électronique au premier système informatique est transmise à l'adresse de communication incluse dans le profil de fournisseur spécifique.

13. Système selon la revendication 11, dans lequel la demande de retrait comprend en outre un numéro d'identification personnel prédéterminé.

14. Système selon la revendication 13, comprenant en outre :
une mémoire (224) d'ATM configurée pour stocker des données indiquant une association entre le premier code et le numéro d'identification personnel prédéterminé.

15. Système selon la revendication 11, dans lequel l'identifiant du dispositif est un numéro de téléphone.
